Europäisches Patentamt

European Patent Office

Office européen des brevets

(11) Publication number: **0 464 949 A1**

# EUROPEAN PATENT APPLICATION

(21) Application number: **91201696.1**

(22) Date of filing: **02.07.91**

(51) Int. Cl.⁵: **C04B 40/02**, C04B 41/48

(30) Priority: **04.07.90 IT 2085490**

(43) Date of publication of application:
**08.01.92 Bulletin 92/02**

(84) Designated Contracting States:
**AT BE CH DE ES GB LI LU NL**

(71) Applicant: **NUOVA SACELIT S.p.A.**
**Via G. Camozzi 124**
**I-24100 Bergamo(IT)**

(72) Inventor: **Marino, Rodolfo**
**Via 3 Armi 13**
**I-24100 Bergamo(IT)**
Inventor: **Torio, Gianrocco**
**Via Pancaldo 9**
**I-20129 Milano(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Method for producing a concrete panel particularly for facings protective against atmospheric agents, and the panel thus produced.**

(57) A method for producing a concrete panel resistant to atmospheric agents and consequently advantageously usable in the formation of protective facings. The panel is formed by using a concrete of low porosity which is subsequently impregnated with an organic monomer polymerized in situ.

EP 0 464 949 A1

This invention relates to a method for producing a concrete panel particularly for facings protective against atmospheric agents. Facings formed from concrete panels are known to be attacked by atmospheric agents.

The degrading action of atmospheric agents is magnified by the unfortunately ever more frequent presence of chemical agents due to environmental pollution.

A concrete casting is particularly sensitive because it is attacked not only on its surface layer but also beyond this layer. This is due to the fact that any concrete used for this purpose comprises by its very nature internal pores which are easily occupied by atmospheric and chemical agents, with obvious consequences.

To provide concrete panels with appreciable resistance to atmospheric and chemical agents it is currently known to apply a protective surface film layer to them. This layer usually consists of bituminous and/or resinous coatings.

Although this method considerably increases the panel resistance to atmospheric and chemical agents, it has the following drawbacks:

- it prejudices the potential aesthetic characteristics of the material and does not ensure the required protection should the faced structure undergo settling;
- the tendentially small thickness of the layer renders the protection sensitive to ageing, wear and accidental impact. The object of the present invention is to provide a method for producing a concrete panel, particularly for protective facings, which overcomes the aforesaid drawbacks by providing an optimum level of insensitivity to atmospheric and chemical agents, but without the stated drawbacks of currently known protective facing panels.

This object is attained by a panel produced by a method in accordance with the claim 1.

The particularly low water/cement ratio coupled with an appropriate inerts diameter and the most suitable quantity of cement enable a casting to be obtained with a tendentially very low porosity. The organic monomer then occupies the pores left free by the excess water and that used for hydration of the cement, and in addition coats the external surface to thus protect it.

The method of the invention is described hereinafter by way of non-limiting example
This method comprises substantially a first stage of preparing a concrete mix, a second stage of forming the panel to obtain a casting, a third stage of curing the panel, and a fourth stage of applying a protective material to the panel.

In the first stage of preparing a concrete mix of minimum possible porosity, a very low water/cement ratio is used, indicatively of less than 0.35-0.40/1, together with a cement quantity of about 400 kg/m³ of concrete, and aggregates in accordance with particle size distribution curves which imply a minimum voids volume in relation to the maximum size of aggregates present.

To obtain a sufficient mix workability, a concrete fluidifier can be used in a quantity of about 1-1.5% of the concrete weight. The second stage comprising panel formation is implemented by moulding to obtain a casting of dimensions and consistency which substantially coincide with those of the finished product. The casting procedure uses at least one of the following techniques or a combination of them:

- putting the concrete casting under vacuum to a vacuum level indicatively of 740 mmHg, or under mechanical compression to a pressure indicatively of about 5 kg/cm²;
- vibrating the mix at a frequency of about 200-300 Hz for about 40 seconds.

The formation stage which offers the best results is one using all the aforesaid techniques in succession.

The third stage comprising curing of the panel is conducted under constant temperature and humidity conditions at a temperature indicatively of 40-45°C, with a relative humidity indicatively exceeding 70%, for a minimum time of eight days.

In this manner maximum cement hydration is achieved in a short time, with a consequent substantial reduction in porosity of the concrete casting. The same advantages can also be obtained by curing the casting in an autoclave at a pressure of between 15 and 20 atm with steam at a temperature of 180-200°C for a time of 6-8 hours.

In the case of an autoclave-cured casting, the hardened concrete is particularly suitable for subsequent impregnation.

The mechanical strength of the impregnated product and its resistance to atmospheric and chemical agents are higher than those obtained using a concrete which has undergone normal curing. In addition, in contrast to ordinary methods, curing by steam utilizes and optimizes the hydrothermal reaction between the lime to be hydrolyzed in the cement and the blown silica normally present in the concrete mix used to cast the panels.

This optimization results in an increase in the mechanical characteristics of the panel.

The fourth stage involves applying a protective material to the panel by impregnating the casting preferably with an organic monomer or monomer mixture followed by polymerization in situ. The impregnation stage comprises dehydrating the panels to be impregnated, immersing the casting into the impregnating substance in the liquid state and thermocatalytically polymerizing the absorbed substance.

Dehydrating the panels eliminates the free water present in the concrete capillaries to allow effective penetration of the impregnating substance.

In this respect, the cured panels for impregnation are dehydrated in an oven at a temperature usually of between 150 and 300°C for a time of between six and eight hours depending on the panel composition and thickness.

It should be noted however that this thermal treatment, which results in effective dehydration of the material, is very different from simple more or less surface drying carried out normally at a temperature of little more than 100°C, in that it results in a structural modification of the cement matrix of the concrete, with a greater tendency for impregnation.

The panel castings are then cooled to a temperature not exceeding 40°C.

The casting is immersed in the impregnating substance (usually methyl methacrylate) for a time period indicatively of between four and six hours.

A polymerization initiator such as azobisisobutyronitrile is previously added to the methacrylate in a quantity of about 1%. To increase absorption, vacuum degassing can be applied before immersing the casting in the bath of impregnating substance. During the immersion of the casting into the impregnating substance, the bath can be pressurized with inert gas to a pressure normally of between 0.5 and 2 atm. This makes the absorption of the impregnating substance by the cement matrix quicker and more complete.

The monomer or monomer mixture absorbed by the panels is polymerized by heating the impregnated casting to a temperature indicatively of between 70 and 80°C.

Water is usually used to provide the heat required for polymerization. The use of water for this purpose is advantageous because in addition to being a low-cost and easily available liquid, it surprisingly limits, more than any other liquid, the escape of the monomer or monomer mixture impregnating the panel before its hardening by thermopolymerization. As an alternative to water, saturated steam indicatively at a temperature of between 90 and 110°C can be used.

The panel prepared in this manner is ready for subsequent mechanical finishing and then installation to provide a protective facing.

The following examples are provided to better illustrate the method of the invention and the product deriving therefrom. It should however be noted that the examples in no way represent a limitation on the invention.

EXAMPLE 1

Samples of concrete panels are prepared by the described method, with cement in a quantity of 400 kg/m$^3$ of concrete, inerts of maximum diameter 4-6 mm and water in a water/cement ratio of 0.38, plus the addition of 1.5% of a concrete fluidifier. After curing at 40°C for eight days, the panels obtained showed a water absorption, measured in accordance with UNI 7899 of 5.5%, a mercury porosity of 10% by volume and a mechanical bending strength of 87 kg/cm$^2$. These values are clearly more favourable than those which could be obtained for known concrete and panel production methods.

After impregnation with methyl methacrylate, for an absorbed polymer weight of 3.8% of the weight of the panel the water absorption was 0.4%, the mercury porosity was 1% of the panel volume and the panel bending strength was 276 kg/cm$^2$.

EXAMPLE 2

The panels of the preceding example were subjected to a frost resistance test and tests on their penetrability to aggressive chloride and sulphate ions in order to better evaluate their resistance under conditions of use.

To make it more severe, the frost resistance test was conducted in the presence of deicing salts in accordance with Rilem CD2. After 30 cycles the impregnated panels had remained unaltered whereas those produced without impregnation, which were used as comparison, demonstrated in this method a surface loss of 0.3 g/cm$^2$ of concrete, this value however being decidedly less than that normally obtained using good concrete.

The aggressive ion penetrability measurement was conducted in accordance with UNI 7928 for chlorides and UNI 8019 for sulphates. The impregnated panels showed a total absence of penetration and an absolute impermeability towards these two aggressive agents, with results confirming that which had already been found in the frost resistance test.

Unimpregnated panels, used for comparison, showed under the same test a penetration extending over the entire thickness (32 mm) of the panels.

EXAMPLE 3

Samples of concrete panels prepared by the previously described method, with cement in a quantity of 400 kg/m$^3$ of concrete, inerts of maximum diameter 4 mm and water in a water/cement ratio of 0.40, plus the addition of 1.5% of superfluidifier and also containing blown silica to the extent of 40% on the cement quantity used, were cured with pressurized steam at a temperature of 180°C for six hours, after which they showed a water absorption measured in accordance with UNI 7899 of 5% of the initial panel weight, a mercury porosity of 10% by volume and a mechanical bending strength of 160 kg/cm³. These values are more favourable than those obtained in Example 1.

After dehydration at 300°C and impregnation with methyl methacrylate by the previously described method, for a polymer percentage of 5.8% of the initial weight of the panel the water absorption is 0.2% of the initial panel weight, the porosity is less than 1% and the mechanical bending strength is 350 kg/cm³. As further confirmation of the validity of the method used, specific aggressive agent resistance tests conducted on these panels as described in Example 2 gave the same positive results in the sense of total frost resistance and no penetration by chlorides or sulphates.

**Claims**

1. A method for producing a concrete panel particularly for facings protective against atmospheric agents, comprising:
   - a first stage of forming the concrete mix;
   - a second stage of forming the panel;
   - a third stage of curing the panel;
   - a fourth stage of applying a protective material to the panel,
   characterised in that:
   - the concrete has a water/cement ratio of between 0.35/1 and 0.40/1, and contains inerts with a maximum diameter indicatively of about 4-6 mm, and a cement quantity indicatively of 400 kg/m³ of concrete, and
   - the fourth stage comprising the dehydration of the panel and its subsequent impregnation with at least one organic monomer which is then polymerized in situ.

2. A method as claimed in claim 1, characterised in that in the first stage a concrete fluidifier is added to the mix in a quantity variable between 1 and 1.5% by weight of the cement.

3. A method as claimed in claim 1, characterised in that the second panel formation stage comprises compacting the concrete casting by at least one of the following methods:
   - putting the concrete casting under vacuum to a vacuum level indicatively of 740 mmHg,
   - mechanically compressing the concrete casting to a pressure indicatively of about 5 kg/cm²;
   - vibrating the mix at a frequency of about 200-300 Hz for about 40 seconds.

4. A method as claimed in claim 3, characterised in that the compacting is conducted by applying the vacuum, the mechanical compression and the mechanical vibration to the concrete casting in succession.

5. A method as claimed in claim 1, characterised in that the third panel curing stage is conducted under constant static thermo-moist conditions at a temperature indicatively of 40-45°C, with a relative humidity indicatively of about 70% for a minimum time of eight days.

6. A method as claimed in claim 1, characterised in that the third panel curing stage is conducted in an autoclave at a pressure indicatively of 15-20 atm with steam at a temperature indicatively of 180-200°C for a time indicatively of between six and eight hours.

7. A method as claimed in claim 1, characterised in that the impregnation is achieved by immersing the concrete casting for a time of between four and six hours in a bath of organic monomer consisting preferably of methyl methacrylate followed by polymerizing said organic monomer by heating the impregnated casting to an overall temperature indicatively of between 70 and 80°C.

8. A method as claimed in claim 7, characterised in that the impregnation takes place in an environment pressurized by inert gas to a pressure indicatively of between 0.5 and 2 atm.

9. A method as claimed in claim 8, characterised in that a polymerization initiator consisting preferably of azobisisobutyronitrile is added to the methacrylate in a quantity indicatively of 1%.

10. A method as claimed in claim 1, characterised in that the panel is dehydrated by heating it in an oven to a temperature preferably of between 150 and 300°C for a time indicatively of 6-8 hours, said panel however being cooled to a temperature not exceeding 40°C before being fed to the next stage.

11. A method as claimed in claim 7, characterised in that the heat required for polymerizing the impregnated casting is obtained by immersing it in water or steam.

12. A concrete panel produced in accordance with one or more of the preceding claims, characterised by comprising a cement quantity indi-

catively of 400 kg/m$^3$ of concrete, said inerts having a maximum diameter of 4-6 mm, and being impregnated with at least one polymerized organic monomer.

13. A protective facing obtained by installing one or more panels claimed in the preceding claim.

European
Patent Office

EUROPEAN SEARCH
REPORT

Application Number

EP 91 20 1696

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | GB-A-1 582 924 (IMCHEMIE KUNSTSTOFF GMBH) <br> * page 1, line 72 - page 2, line 100; claims 1,3,7 * <br> – – – | 1,7,8,11 | C 04 B 40/02 <br> C 04 B 41/48 |
| Y,A | FR-A-2 104 056 (SOCIT 7 ITALIANA PER AZIONI PER LA PRODUZIONE DI CALCI E CEMENTI DI SEGNI) <br> * page 4, line 33 - line 36 * * page 6, line 24 - page 7, line 8; claims 1,5-7,9,12,13 * <br> – – – | 1,7,8,6,12 | |
| A | WORLD PATENTS INDEX LATEST Accession No 84-098834, Week 16 DERWENT PUBLICATIONS LTD, LONDON, GB <br> & SU-A-992 186 (SOYUZZHELEZOBETON) February 5, 1983 <br> – – – | 3 | |
| A | WORLD PATENTS INDEX LATEST Accession No 81-M8540D, Week 50 DERWENT PUBLICATIONS LTD, LONDON, GB <br> & SU-A-810 919 (MOSC. CIVIL. ENG. INSTITUT) April 9, 1981 <br> – – – | 1,3 | |
| A | FR-A-2 278 647 (INSTITUT CATHOLIQUE D'ARTS & METIERS DE LILLE) <br> * the whole document * <br> – – – | 1,6-8,10 | TECHNICAL FIELDS SEARCHED (Int. Cl.5) <br><br> C 04 B |
| A | CHEMICAL ABSTRACTS, vol. 85, no. 8, August 23, 1976, Columbus, Ohio, US; abstract no. 51057M, page 290 ; <br> * abstract & JP-A-51 002 933 (OTSUKA CHEMICAL DRUGS CO) January 30, 1976 * <br> – – – | 7,9 | |
| A | CHEMICAL ABSTRACTS, vol. 110, no. 7, April 3, 1989, Columbus, Ohio, US; abstract no. 120185A, page 352 ; <br> * abstract & JP-A-63 248 752 (KUBOTA LTD) October 11, 1988 * <br> – – – – – | 1,2,7,8 | |

The present search report has been drawn up for all claims

| Place of search | Date of completion of search | Examiner |
|---|---|---|
| The Hague | 10 October 91 | THEODORIDOU E. |